# EUROPEAN PATENT SPECIFICATION

(11) **EP 3 406 936 B1**
(45) Date of publication and mention of the grant of the patent: **26.08.2020**
(21) Application number: 17305594.8
(22) Date of filing: 22.05.2017
(51) Int. Cl.: F16H 25/22

(54) **IMPROVED PLANETARY SCREW MECHANISM**
VERBESSERTER PLANETARER SCHRAUBMECHANISMUS
MÉCANISME DE VIS PLANÉTAIRE AMÉLIORÉ

(43) Date of publication of application: 28.11.2018
(73) Proprietor: Goodrich Actuation Systems SAS, 95310 Saint-Ouen-l'Aumone (FR)
(72) Inventor: De La Chevasnerie, Arnaud, 92410 Ville d'Avray (FR)
(74) Representative: Dehns

(56) References cited:
- CH-A5- 665 459
- FR-A- 1 199 429
- GB-A- 819 978

## Description

### FIELD OF THE INVENTION

This disclosure relates to the field of mechanical actuators, and in particular, roller, or planetary screws.

### BACKGROUND

A planetary roller screw is a mechanical actuator that works as a rotary to linear conversion device. In other words, they are low-friction; precision screw-type actuators that convert rotational motion to linear motion, or vice versa. These mechanical devices are often used as the actuating mechanism in many electromechanical linear actuators in variety of industries such as manufacturing and aerospace.

Electromechanical actuators having a high stall load and a small space envelope often have a planetary roller screw integrated into their design. In the case of fixed wing aircrafts, the place allocated to the motor will become smaller and smaller and the life duration will become increased for higher permanent loads. GB 819978 A describes a roller bearing device for helicoidal movement

### SUMMARY

A planetary roller screw mechanism is described comprising a screw having an outer circumference with an outer thread; a nut disposed around and positioned coaxially with the screw, the nut comprising an inner thread, and a plurality of rollers that are disposed around the outer circumference of the screw, between the screw and the nut, each of said rollers being provided with an outer thread aligned or engaged with the outer thread of the screw and the inner thread of the nut. Each of the plurality of rollers may have at least a section of its thread profile between a trough and peak which is convex. Either, or both, of the screw and nut may also have at least a section of the thread profile between a peak and a trough that is concave. The section of the roller thread profile that is convex has a convex ogive radius. The section of the screw thread profile that is concave has a concave ogive radius and the section of the nut thread profile that is concave can also be described as having a concave ogive radius.

The screw and/or nut concave ogive radii are twice the size of the roller convex ogive radius.

In any of the examples described herein the roller may be described as having an axis that is parallel to the axis of the screw and parallel to the axis of the nut.

In some examples, the peaks of the roller thread profile may be truncated, and the troughs may be rounded. In some examples described herein, the troughs of the modified screw and/or nut thread profiles may be pointed into a sharp V shape. In some examples, the peaks of the modified screw and/or nut thread profiles may be truncated.

A method of forming a planetary roller screw mechanism is also described comprising providing a screw having an outer thread; positioning a nut around the screw so that the nut is coaxial with the screw, the nut comprising an inner thread; and positioning a plurality of rollers around the outer circumference of the screw between the screw and the nut, each of said rollers being provided with an outer thread engaged or aligned with the outer thread of the screw and the inner thread of the nut. The method further comprises modifying the thread profile of either or both of the screw and nut so that there is at least a portion between a peak and an adjacent trough of the screw and/or nut thread profile that is concave.

The screw and/or nut have a convex ogive radius and the screw and/or nut concave ogive radii are twice the size of the roller convex ogive radius.

In some examples described herein, the method may comprise positioning the roller relative to the screw and/or nut so that the convex portion of the roller thread profile interfaces with/is aligned or engages with the convex portion of the screw and/or nut thread profile.

### BRIEF DESCRIPTION OF THE DRAWINGS

Preferred embodiments will now be described by way of example only, with reference to the accompanying drawings.
Figure 1 depicts a perspective cut-away view of a planetary roller screw and nut with a section of the nut cut away so that the internal features are shown.
Figure 2 depicts a perspective exploded view of figure 1
Figure 3 depicts the thread profile of a known planetary roller screw mechanism showing the contact points and interfaces between a typical roller and a screw or nut.
Figure 4 depicts the thread profile of an improved planetary roller screw mechanism showing the contact points between a roller and a modified screw or nut.
Figure 5 depicts the thread profile of a roller such as shown in figures 3 and 4 that may be used in the examples described herein.
Figure 6 depicts the thread profile of an improved and modified screw or nut such as shown in figure 4.
Figure 7 depicts the thread profile of a known screw or nut which has a straight thread profile.

### DETAILED DESCRIPTION

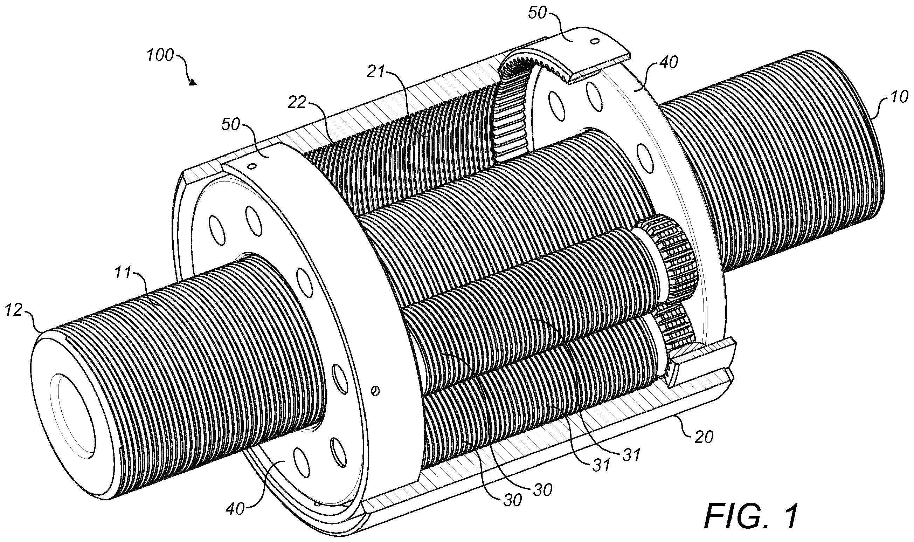

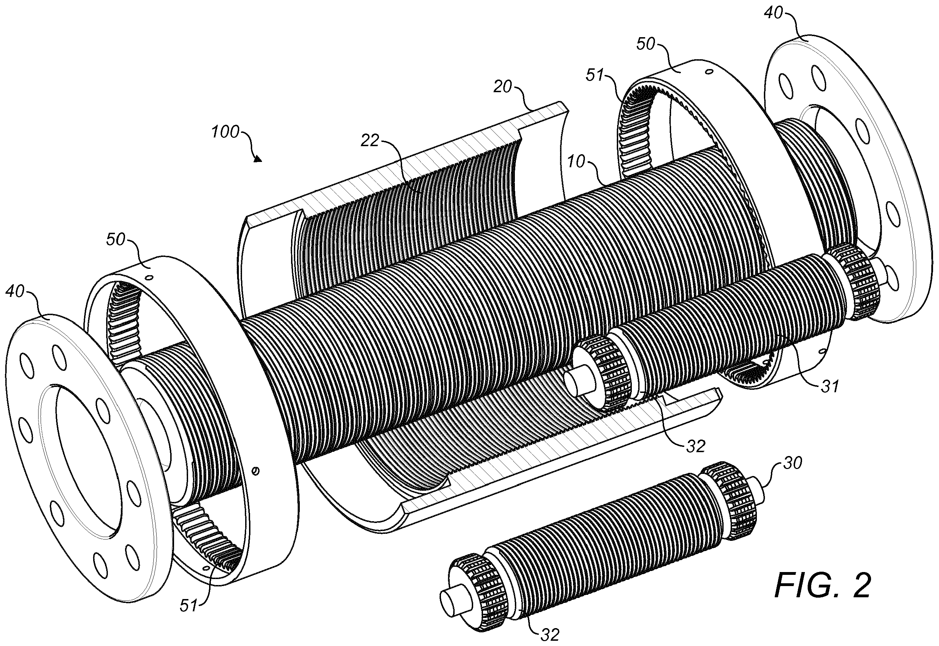

A planetary roller screw mechanism 100 is shown in figures 1 and 2 which show a cut-away perspective view and an exploded perspective view, respectively. The design comprises a screw 10 having an outer circumference 12 on which there is an external screw thread 11. A hollow nut 20 is also provided, which has an internal 22 circumference, on which there is an internal screw thread 21, and a plurality of rollers 30. The screw 10 and nut 20 are concentric. Similar to the screw 10, each of the rollers 30 also has an outer circumference 32, on which there is an external screw thread 31. The rollers 20 are positioned around the outer circumference 12 of the screw 10 so that they lie between the nut 20 and the screw 10 and are in contact with the internal screw thread 21 of the nut 20 and the external screw thread 11 of the screw 10. The rollers 30 are guided by roller guide rings 40, which are provided so as to keep them equally spaced around the outer circumference 12 of the screw 10.

The screw threads 11, 21, 31 of the screw 10, nut 20 and rollers 30 may therefore be described as comprising a helical structure 11, 21, 31 that is provided on the external circumferential surfaces 12, 32 of the screw 10 and rollers 30 and the inner circumferential surface 22 of the nut 20. In greater detail, the screw threads 11, 31 of the screw 10 and rollers 30 are male screw threads 11, 31 that comprise a helical ridge that is wrapped around the outer circumference 13, 33 of the cylindrical body of the screw 10 and rollers 30, whereas the nut 20 has a female screw thread 21 comprising a helical ridge 21 that is wrapped around the inner circumference 23 of the hollow nut 20.

The rotation of the rollers 30 with the nut 20 is controlled by gears 50, as is known in the art. During rotation of a standard planetary roller screw, there is no displacement between the rollers and the nut and the synchronizing gears prevent any sliding of these features relative to each other. Such sliding is disadvantageous as it would block the planetary roller screws if it occurred. For an inverted planetary roller screw, there is no displacement between the rollers and the screw and the synchronizing gears avoid the sliding between those features which would also block the planetary roller screws if it occurred.

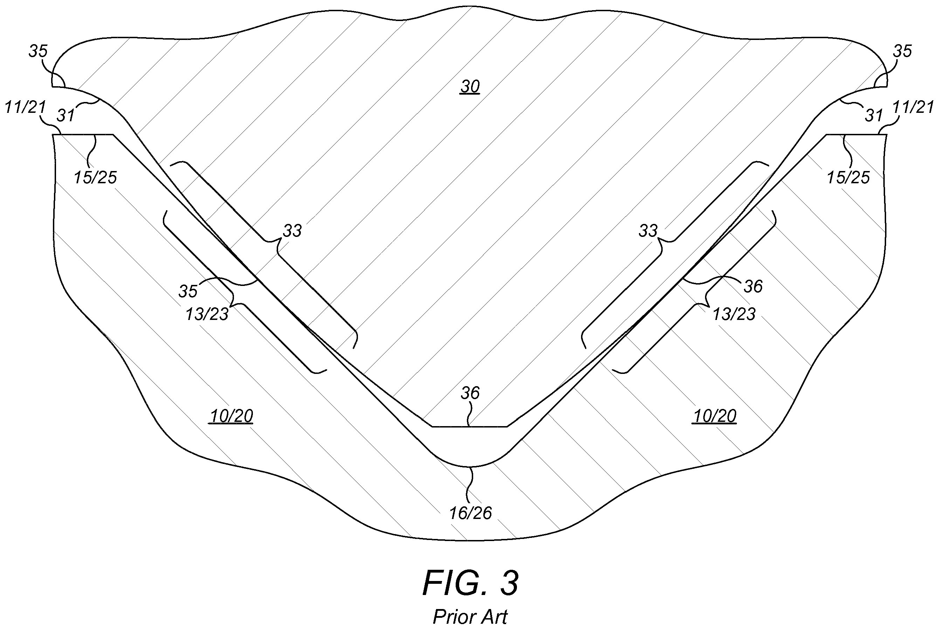

The cross-sectional shape (or thread profiles) of screw threads, 11, 21, 31, 11', 21' are depicted in figures 3 to 7. As can be seen in these figures, these screw threads have triangular or V-shaped thread profiles.

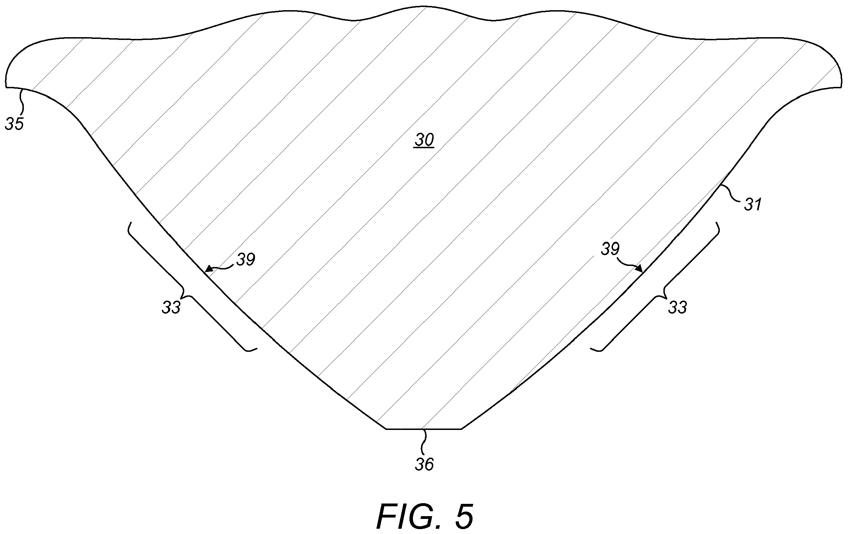

In known roller screws, such as is shown in figure 3, the roller 30 comprises a V-shaped thread profile, each V-shaped ridge 31 having a peak 36 between two troughs 35 (or, written another way, a trough 35 between two peaks 36). The thread profile of the section 33 of the screw thread 31 between a trough 35 and an adjacent peak 36, however, is normally convex in shape, as is shown in figures 3 and 5.

The screw 10 and nut 20, also both comprise a V-shaped thread profile, as is shown in figure 3, with a V-shaped ridge that extends from a first peak 15, 25 to a trough 16, 26 and to an adjacent second peak 15, 25 (or, written another way, each ridge has a peak 15, 25 between two adjacent troughs 16, 26). Since the profile would be the same between the roller 30 and the screw 10 and the roller 30 and the nut 20, the reference numerals for both the screw 10 and nut 20 are depicted as alternatives in figure 3.

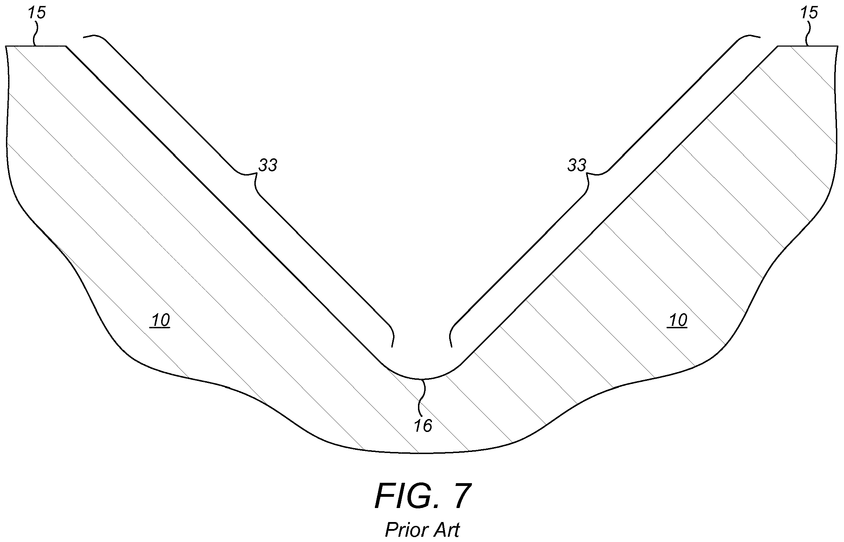

In known planetary screws, such as that shown in figures 3 and 7, the thread profile of the section 13, 23 of the screw thread 11, 21 between a peak 15, 25 and an adjacent trough 16, 26 is straight, as is depicted in figures 3 and 7.

In use, the external screw thread 31 of the rollers 30 has areas or points of contact, 35, 36 at which it interfaces with the internal thread 21 of the nut 20 and the external thread 11 of the screw, as is shown in figure 3. In known systems, the portion 33 of the thread profile of the rollers 30 that is convex contacts (at points 35 and 36) and interfaces with the straight section 15, 25 of the screw 10 and/or nut 20 profile, as is shown in figure 3.

The improved examples described herein below aim to reduce the Hertz contact stresses at these contact interfaces 35, 36 between the roller 30 and screw 10 and roller 30 and/or roller 30 and nut 20. This is achieved by modifying the thread profiles of the screw 10 and nut 20 and therefore also affecting the contact points 35, 36 between the roller/screw and roller/nut as is described in detail below.

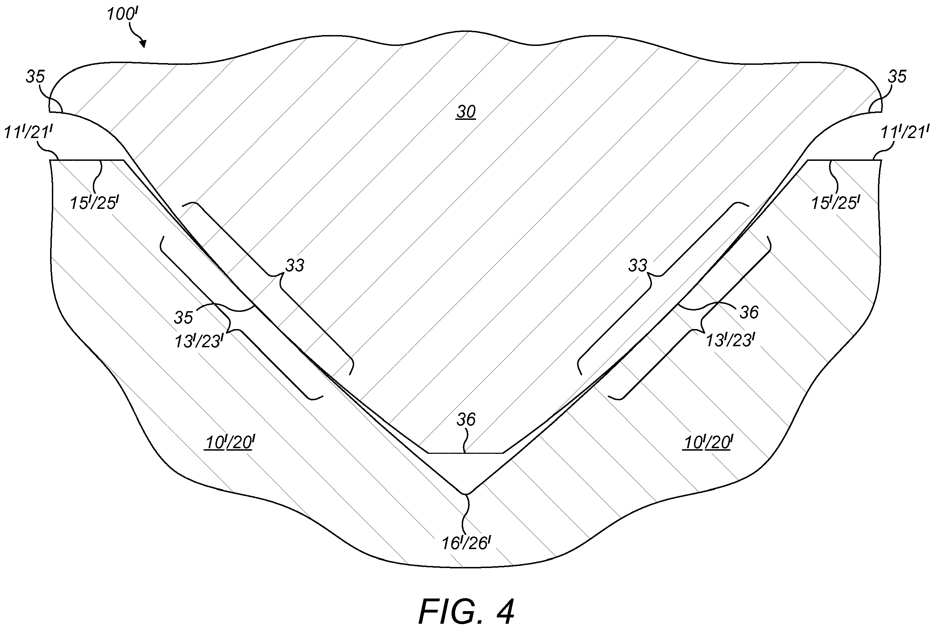

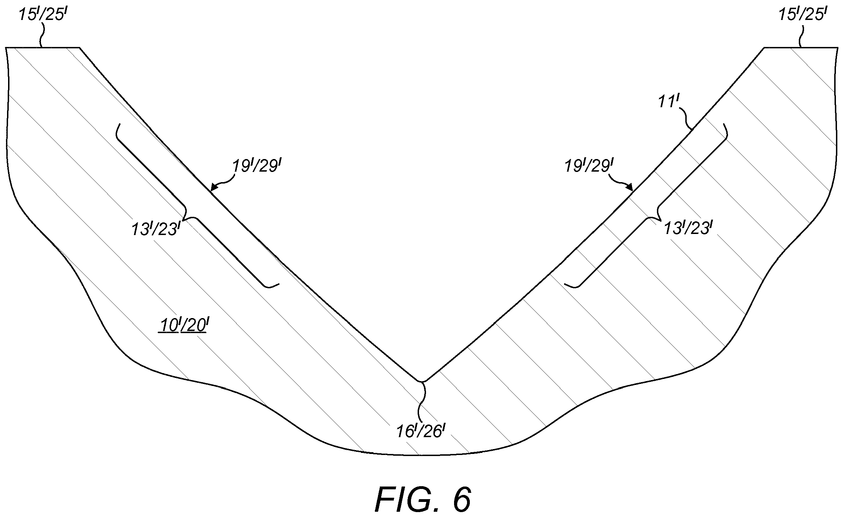

The improved and modified screw and nut are now described. The same reference numerals are used to describe and depict the same features as described with reference to figures 1 to 3, however, the modified and improved features are denoted further by the sign ' (e.g. 10 when modified is denoted by 10' etc.). Since the profile would be the same between the roller 30 and the modified screw 10' and the roller 30 and the modified nut 20', the reference numerals for both the screw 10' and nut 20' are depicted as alternatives in figures 4 and 6.

In the improved examples of the planetary roller screws described herein, as shown in figures 4 to 6, the roller 30 may have the same V-shaped profile as is described above with reference to figure 3. In contrast to known mechanisms, however, either one, or preferably both of, the screw threads 11', 21', of the screw 10' and nut 20' are modified, as depicted in figures 4 and 6, so that, instead of having a section that is straight extending from a peak 15', 25', to a trough, 16', 26', at least a portion, 13', 23' of the screw thread 10' and/or nut thread 20' extending from a peak 15', 25', to a trough 16', 26' has a concave shape. This is depicted most clearly in figure 6, which also shows the concave thread radius 19', 29'.

Therefore, in use, and as shown in figure 4, the portion 33 of the rollers 30 that is convex contacts and interfaces at least at a point 35', 36' within the portion 13' of the nut 20' and/or screw 10' that is concave, as is shown in figure 4.

As can also be seen in figure 4, the peaks 15', 16', 25', 26' of the screw 10' and/or nut 20' thread profiles may be truncated. The peaks 36 of the roller thread profiles may also be truncated.

On the other hand, the troughs 16', 26' of the modified screw and/or nut 20' thread profiles may have a sharp V shape extending into the trough 16', 26'. This is also different to known screw 10 and nut 20 thread profiles as shown in figure 3, wherein the trough is rounded.

The modification of the screw and nut thread profiles may be achieved via any suitable method known in the art, such as grinding. Modifying the profiles by grinding is a very accurate method. In figures 4 and 6 the thread profiles and contact points 35', 36' between the roller 30 and screw 10' or nut 20' is shown.

A method of forming the improved planetary roller screw mechanism 100' may therefore comprise providing a screw 10' having an outer circumference with an outer thread 11' that has a V-shaped thread profile that has at least a portion 13' extending between a first peak 15' and a first trough 16' that is concave, as shown in figures 4 and 6. The method may further comprise providing a nut 20' that has a modified inner thread 21' which also has a V-shaped thread profile wherein at least a portion 23' extending from a peak 25' to a trough 26' is concave. In some methods, either or both of the screw 10' and nut 20' thread profile may be modified in this way. The method further comprises providing a plurality of rollers 30 that have a thread profile wherein at least a portion 33 extending between a first trough 35 and an adjacent peak 36 is convex, as shown in figure 5.

In order to assemble the planetary roller screw mechanism, the nut 20' can therefore be positioned as shown in figures 1 and 2 so that it is situated around the screw 10' with the nut 20' being coaxial with the screw 10', and further comprising the plurality of rollers 30 around the outer circumference of the screw 10', between the screw 10' and the nut 20'. The outer thread 31 of each of the rollers 30 is aligned and/or engaged at least at the convex portion 33 with the corresponding concave portions 13', 23' of the outer thread 11' of the screw 10' and the inner thread 21' of the nut 20'. The axis of the rollers 30 is parallel to the axes of the screw 10' and nut 20'.

By modifying the thread profiles of the screw 10' and nut 20' as shown in figures 4 and 6, the maximal Hertz contact pressure in the improved embodiment shown in figure 4 is directly reduced, while the two threads (e.g. the convex roller 30 thread profile with the concave screw 10' thread profile and the convex roller 30 thread profile with the concave nut 20' thread profile) have enveloping forms as shown in figure 4.

More specifically, the example shown in figure 4 can be described as having a roller 30 with a profile with at least a portion 33 extending between a trough 35 and a peak 36 that has a convex ogive radius 39 (as shown in figures 3 and 5).

In the improved planetary roller screws, as shown in figures 4 and 6 the modified screw 10' and nut 20' have at least a portion 13', 23' of their thread profiles that have a concave ogive radius 19'. In some examples, the screw 10 and nut 20 concave ogive radius/radii 19' may also be twice the size of the corresponding roller convex ogive 39' radius. This results in a maximal Hertz contact pressure that in this case is 20% less than in known systems. Since the life duration of a planetary Roller Screw is linked to the maximal Hertz contact stresses at the contact Roller/Screw and the maximal Hertz contact stresses at the contact Roller/Nut, such a reduction in pressure can therefore greatly improve the life duration of the roller screw.

In addition to this, in a situation wherein the space envelope of the Roller Screw is defined, reducing the Hertz contact stresses will also result in an increase in the static and dynamic load capacity of the Roller, which thereby increases the life duration of the roller screw.

In another situation wherein for a defined space envelope the life duration is satisfied, if the Hertz contact stresses are reduced, the space envelope of the Roller Screw will also be decreased, which will then result in the same static and dynamic load capacity being kept and so giving more space for the rest of the mechanism.

In a further situation, wherein the space envelope of the Roller Screw is defined, by reducing the Hertz contact stresses, the same static and dynamic load capacity of a Roller Screw can be kept by reducing the number of Rollers or by reducing the length of the Rollers.

The improved examples described herein therefore result in many advantages over known systems including: a higher life duration of the roller screw, less space envelope being required for the roller screw; less rollers being required to place in the roller screw; more space being given to the guiding bearings; more space being given to the electrical motor; a lower space envelope of the actuator integrating the roller screw and so easier installation in a thin wing of a fixed wing aircraft.

## Claims

1. A planetary roller screw mechanism (100') comprising:
a screw (10') comprising an outer circumference with an outer thread (11') disposed thereon;
a nut (20') comprising an inner circumference (22') with an inner thread (21') disposed thereon, said nut (20') being disposed around and positioned coaxially with the screw (10'); and
a plurality of rollers (30) disposed around the outer circumference of the screw (10'), between the screw (10') and the nut (20');
each of said rollers (30) having an outer circumference (32) with an outer thread (31) disposed thereon, said roller thread (31) engaging with said screw thread (11') and said nut thread (21'); and
wherein each of said plurality of rollers (30) has a V-shaped thread profile that has at least a portion that is convex (33) extending between a trough (35) and an adjacent peak (36) of the roller thread profile; and
wherein either one or both, of said screw (10') and said nut (20') has/have a V-shaped thread profile that has at least a portion (13', 23') that is concave extending between a peak (15', 25') and an adjacent trough (16', 26') of the screw or nut profile, and said convex portion (33) of the roller thread profile has a convex ogive radius;
said concave portion (13') of the screw thread profile and/or the nut thread profile has a concave ogive radius and **characterized in that** said screw and nut concave ogive radii are twice the size of the roller convex ogive radius.

2. The mechanism of claim 1 wherein
said convex portion (33) of the roller thread profile of said plurality of rollers (30) is aligned with said concave portion (13', 23') of the screw and/or nut thread profile.

3. A method of forming a planetary roller screw mechanism (100') comprising:
providing a screw (10') having an outer circumference with an outer thread (11') disposed thereon;
positioning a nut (20') around the screw (10') so that the nut (20') is coaxial with the screw (10'), the nut (20') comprising an inner thread (21'); and
positioning a plurality of rollers (30) around the other circumference of the screw (10'), between the screw (10') and the nut (20');
each of said rollers (30) being provided with an outer thread (31) aligned with the thread (11') of the screw (10') and the thread (21') of the nut (20'); and
wherein each of said plurality of rollers (30) has a V-shaped thread profile that has at least a portion that is convex (33) extending between a trough (35) and an adjacent peak (36) of the roller thread profile; and
wherein either one or both, of said screw (10') and said nut (20') has/have a V-shaped thread profile that has at least a portion (13', 23') that is concave extending between a peak (15', 25') and an adjacent trough (16', 26') of the screw or nut profile, and wherein
said roller thread profile has a convex ogive radius;
said screw thread profile has a concave ogive radius; and/or
said nut thread profile has a concave ogive radius, and **characterized in that** said screw and/or nut concave ogive radii are twice the size of the roller convex ogive radius.

4. The method of claim 3 comprising
positioning said roller (30) relative to said screw (10') and said nut (20') so that said convex portion (33) of the roller thread profile aligns with said concave portion (13', 23') of the screw and/or nut thread profile.

## Patentansprüche

1. Planetarer Rollenschraubmechanismus (100'), der Folgendes umfasst:
eine Schraube (10'), die einen äußeren Umfang mit einem darauf angeordneten äußeren Gewinde (11') umfasst;
eine Mutter (20'), die einen inneren Umfang (22') mit einem darauf angeordneten inneren Gewinde (21') umfasst, wobei die Mutter (20') um die Schraube (10') und koaxial zu dieser angeordnet ist; und
eine Vielzahl von Rollen (30), die um den äußeren Durchmesser der Schraube (10') zwischen der Schraube (10') und der Mutter (20') angeordnet ist;
wobei jede der Rollen (30) einen äußeren Durchmesser (32) mit einem darauf angeordneten äußeren Gewinde (31) aufweist, wobei das Rollengewinde (31) das Schraubengewinde (11') und das Muttergewinde (21') in Eingriff nimmt; und
wobei jede der Vielzahl von Rollen (30) ein V-förmiges Gewindeprofil aufweist, das mindestens einen Abschnitt aufweist, der konvex (33) ist und sich zwischen einem Grund (35) und einer angrenzenden Spitze (36) des Gewindeprofils der Rolle erstreckt; und
wobei entweder eine oder beide der Schraube (10') und der Mutter (20') ein V-förmiges Gewindeprofil aufweist/aufweisen, das mindestens einen Abschnitt (13', 23') aufweist, der konkav ist und sich zwischen einer Spitze (15', 25') und einem angrenzenden Grund (16', 26') des Profils der Schraube oder der Mutter erstreckt, wobei der konvexe Abschnitt (33) des Gewindeprofils der Rolle einen konvexen Spitzbogenradius aufweist;
wobei der konkave Abschnitt (13') des Gewindeprofils der Schraube und/oder der Mutter einen konkaven Spitzbogenradius aufweist, **dadurch gekennzeichnet, dass** die konkaven Spitzbogenradien der Schraube und der Mutter die doppelte Größe des konvexen Spitzbogenradius der Rolle aufweisen.

2. Mechanismus nach Anspruch 1, wobei
der konvexe Abschnitt (33) des Gewindeprofils der Rolle der Vielzahl von Rollen (30) an dem konkaven Abschnitt (13', 23') des Gewindeprofils der Schraube und/oder der Mutter ausgerichtet ist.

3. Verfahren zum Bilden eines planetaren Rollenschraubmechanismus (100'), das Folgendes umfasst:
Bereitstellen einer Schraube (10') die einen äußeren Umfang mit einem darauf angeordneten äußeren Gewinde (11') aufweist;
Positionieren einer Mutter (20') um die Schraube (10'), sodass die Mutter (20') koaxial zu der Schraube (10') ist, wobei die Mutter (20') ein inneres Gewinde (21') umfasst; und
Positionieren einer Vielzahl von Rollen (30) um den äußeren Umfang der Schraube (10') zwischen der Schraube (10') und der Mutter (20');
wobei jede der Rollen (30) mit einem äußeren Gewinde (31) bereitgestellt ist, das an dem Gewinde (11') der Schraube (10') und dem Gewinde (21') der Mutter (20') ausgerichtet ist; und
wobei jede der Vielzahl von Rollen (30) ein V-förmiges Gewindeprofil aufweist, das mindestens einen Abschnitt aufweist, der konvex (33) ist und sich zwischen einem Grund (35) und einer angrenzenden Spitze (36) des Gewindeprofils der Rolle erstreckt; und
wobei entweder eine oder beide der Schraube (10') und der Mutter (20') ein V-förmiges Gewindeprofil aufweist/aufweisen, das mindestens einen Abschnitt (13', 23') aufweist, der konkav ist und sich zwischen einer Spitze (15', 25') und einem angrenzenden Grund (16', 26') des Profils der Schraube oder der Mutter erstreckt, und wobei
das Gewindeprofil der Rolle einen konvexen Spitzbogenradius aufweist;
das Gewindeprofil der Schraube einen konkaven Spitzbogenradius aufweist; und/oder
das Gewindeprofil der Mutter einen konkave Spitzbogenradius aufweist, **dadurch gekennzeichnet, dass** die konkaven
Spitzbogenradien der Schraube und/oder der Mutter die doppelte Größe des konvexen Spitzbogenradius der Rolle aufweisen.

4. Verfahren nach Anspruch 3, das Folgendes umfasst:
Positionieren der Rolle (30) in Bezug auf die Schraube (10') und die Mutter (20'), sodass der konvexe Abschnitt (33) des Gewindeprofils der Rolle an dem konkaven Abschnitt (13', 23') des Gewindeprofils der Schraube und/oder der Mutter ausgerichtet ist.

## Revendications

1. Mécanisme de vis à rouleaux planétaires (100') comprenant :
une vis (10') comprenant une circonférence extérieure avec un filetage extérieur (11') disposé sur celle-ci ;
un écrou (20') comprenant une circonférence intérieure (22') avec un filetage intérieur (21') disposé sur celui-ci, ledit écrou (20') étant disposé autour et positionné coaxialement à la vis (10') ; et
une pluralité de rouleaux (30) disposés autour de la circonférence extérieure de la vis (10'), entre la vis (10') et l'écrou (20') ;
chacun desdits rouleaux (30) ayant une circonférence extérieure (32) avec un filetage extérieur (31) disposé sur celui-ci, ledit filetage de rouleau (31) venant en prise avec ledit filetage de vis (11') et ledit filetage d'écrou (21') ; et
dans lequel chacun de ladite pluralité de rouleaux (30) a un profil de filetage en forme de V qui a au moins une partie qui est convexe (33) s'étendant entre un creux (35) et un pic adjacent (36) du profil de filetage de rouleau ; et
dans lequel l'un ou les deux de ladite vis (10') et dudit écrou (20') a/ont un profil de filetage en forme de V qui a au moins une partie (13', 23') qui est concave s'étendant entre un pic (15', 25') et un creux adjacent (16', 26') du profil de vis ou d'écrou, et ladite partie convexe (33) du profil de filetage de rouleau a un rayon d'ogive convexe ;
ladite partie concave (13') du profil de filetage de vis et/ou du profil de filetage d'écrou a un rayon d'ogive concave et **caractérisé en ce que** lesdits rayons d'ogive concave de vis et d'écrou ont deux fois la taille du rayon d'ogive convexe de rouleau.

2. Mécanisme selon la revendication 1, dans lequel
ladite partie convexe (33) du profil de filetage de rouleau de ladite pluralité de rouleaux (30) est alignée avec ladite partie concave (13', 23') du profil de filetage de vis et/ou d'écrou.

3. Procédé de formation d'un mécanisme de vis à rouleaux planétaires (100') comprenant :
la fourniture d'une vis (10') ayant une circonférence extérieure avec un filetage extérieur (11') disposé sur celle-ci ;
le positionnement d'un écrou (20') autour de la vis (10') de sorte que l'écrou (20') est coaxial avec la vis (10'), l'écrou (20') comprenant un filetage intérieur (21') ; et
le positionnement d'une pluralité de rouleaux (30) autour de l'autre circonférence de la vis (10'), entre la vis (10') et l'écrou (20') ;
chacun desdits rouleaux (30) étant pourvu d'un filetage extérieur (31) aligné avec le filetage (11') de la vis (10') et le filetage (21') de l'écrou (20') ; et
dans lequel chacun de ladite pluralité de rouleaux (30) a un profil de filetage en forme de V qui a au moins une partie qui est convexe (33) s'étendant entre un creux (35) et un pic adjacent (36) du profil de filetage de rouleau ; et
dans lequel l'un ou les deux de ladite vis (10') et dudit écrou (20') a/ont un profil de filetage en forme de V qui a au moins une partie (13', 23') qui est concave s'étendant entre un pic (15', 25') et un creux adjacent (16', 26') du profil de vis ou d'écrou, et dans lequel
ledit profil de filetage de rouleau a un rayon d'ogive convexe ;
ledit profil de filetage de vis a un rayon d'ogive concave ; et/ou
ledit profil de filetage d'écrou a un rayon d'ogive concave, et **caractérisé en ce que**
lesdits rayons d'ogive concave de vis et/ou d'écrou ont deux fois la taille du rayon d'ogive convexe de rouleau.

4. Procédé selon la revendication 3, comprenant :
le positionnement dudit rouleau (30) par rapport à ladite vis (10') et audit écrou (20') de sorte que ladite partie convexe (33) du profil de filetage de rouleau s'aligne avec ladite partie concave (13', 23') du profil de filetage de vis et/ou d'écrou.
